# EUROPEAN PATENT APPLICATION

(11) **EP 2 894 057 A1**
(43) Date of publication of application: **15.07.2015**
(21) Application number: 14150547.9
(22) Date of filing: 09.01.2014
(51) Int. Cl.: B60L 3/04

(54) **Method for discharging DC intermediate circuit of converter and converter**

(71) Applicant: ABB Oy, 00380 Helsinki (FI)
(72) Inventor: Hellman, Jouko, 00380 Helsinki (FI); Friman, Aarne, 00380 Helsinki (FI); Talja, Markku, 00380 Helsinki (FI)
(74) Representative: Kolster Oy Ab

(57) **Abstract**

A method for discharging a DC intermediate circuit of a converter and a DC intermediate circuit (10) and a converter comprising at least one group of at least two controllable power semiconductor switches (S1, S2, S3, S4, S5, S6, S7, S8) connected in series between two poles (UDC+, UDC-) of the DC intermediate circuit, and means (40) for controlling one or more groups of said at least one group of at least two controllable power semiconductor switches (S1, S2, S3, S4, S5, S6, S7, S8) of the converter to conduct current between the two poles (UDC+, UDC-) of the DC intermediate circuit (10) in such a manner that a resulting total power dissipation in said one or more groups of said at least one group of at least two controllable power semiconductor switches of the converter causes a voltage of the DC intermediate circuit to decrease below a predetermined voltage level within a predetermined time.

## Description

### Field of the invention

The invention relates to a method for discharging a DC intermediate circuit of a converter, and a converter.

### Background of the invention

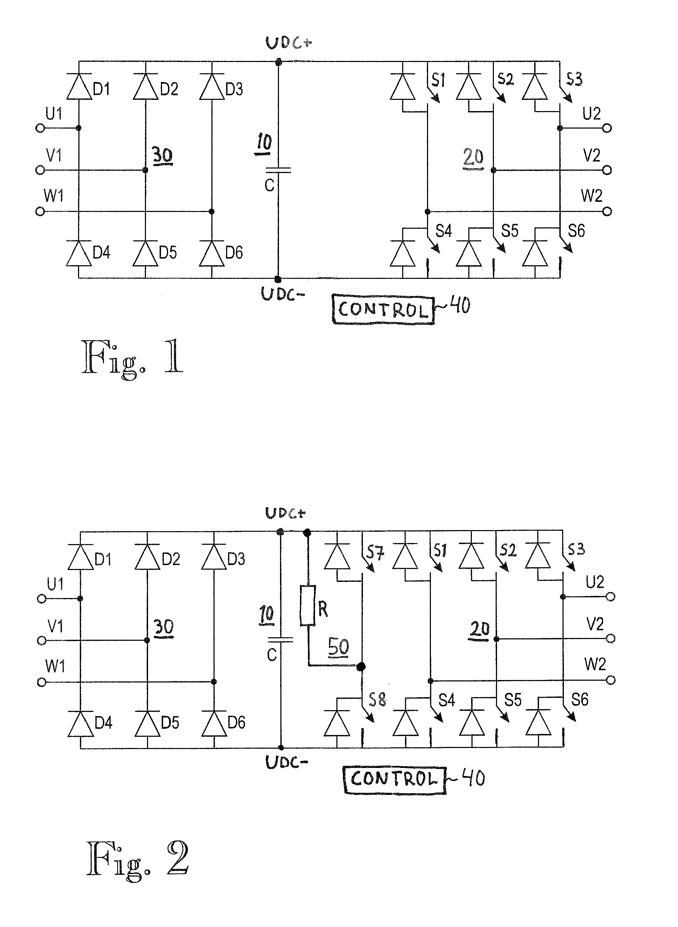

A converter such as a rectifier or inverter or a combination thereof, such as a frequency converter, may comprise a DC (Direct Current) intermediate circuit. Figure 1 shows an example of a frequency converter. The exemplary frequency converter may be composed of a rectifier 30 and an inverter 20, between which is provided a DC intermediate circuit 10. The rectifier 30 and the inverter 20 may also be located physically separately, and one rectifier may supply a plurality of inverters via a common DC intermediate circuit 10. An example of the rectifier 30 is a diode bridge D1 to D6, which obtains its supply from an AC (Alternating Current) source U1, V1, W1, which is for instance a 50 or 60-Hz AC network, and an example of the inverter 20 is a semiconductor bridge implemented by means of transistors S1 to S6, such as IGBTs (Insulated-gate Bipolar Transistor) or FETs (Field-Effect Transistor), or other controllable semiconductor switches, which are controlled according to a modulation scheme used. The inverter 20 may be used to control the power transferred from the intermediate circuit 10 of the frequency converter to its output U2, V2, W2. Accordingly the supply from the output U2, V2, W2 of the inverter 20 may be a three-phase AC output.

In some applications there may exist a need to be able to discharge the DC intermediate circuit quickly, so that the voltage of the DC intermediate circuit decreases to a safe level, without using external components such as an external brake resistor. An example of such a situation is a HVIL (High Voltage Interlock Loop) functionality which may be used in e.g. HEV (Hybrid Electric Vehicles) and EV (Electric Vehicles) applications. The HVIL functionality requires that all energy storages containing dangerous voltages must be discharged to a safe voltage level quickly when the interlock loop is broken. The interlock loop may be broken when a cover of the device is opened or when a cable is detached from the device, for example. The purpose of the HVIL functionality is thus to guarantee the safety of e.g. maintenance personnel who perform maintenance operations to the device in question. In case of a converter device containing a DC intermediate circuit comprising an energy storage, the application of the HVIL functionality means that the DC intermediate circuit must be discharged to a safe voltage level quickly when the interlock loop is broken. Such discharging could be performed using an additional discharge resistor placed inside the housing of the converter device. However, the placement of such an additional component within a possibly cramped housing of the converter while at the same time providing a sufficient cooling for the additional component may be problematic.

### Brief description of the invention

An object of the invention is to provide a method and an apparatus for implementing the method so as to solve or at least alleviate the above problem. The object of the invention is achieved by a method, a computer program product, and a converter that are characterized by what is stated in the independent claims. Preferred embodiments of the invention are described in the dependent claims.

The invention is based on the idea of controlling one or more groups of at least two controllable power semiconductor switches of the converter to conduct current between the two poles of the DC intermediate circuit in such a manner that a resulting total power dissipation in said one or more groups of at least two controllable power semiconductor switches of the converter causes a voltage of the DC intermediate circuit to decrease below a predetermined voltage level within a predetermined time.

The solution of the invention provides the advantage that the DC intermediate circuit of the converter can be discharged using existing controllable power semiconductor switches of the converter and thus no additional components are necessarily needed. In addition, released energy from the discharging can be removed through the converter cooling system into which the controllable power semiconductor switches of the converter are connected.

### Brief description of the figures

The invention will now be explained in greater detail in connection with preferred embodiments and with reference to the attached drawings, in which:
Figure 1 shows a circuit diagram of a converter according to an embodiment; and
Figure 2 shows a circuit diagram of a converter according to an embodiment.

### Detailed description of the invention

The application of the invention is not restricted to any specific system, but it may be applied to various converter devices that comprise a DC intermediate circuit. The term 'converter' refers generally to a device which converts electric power from one form to another. Some examples of converters comprise a frequency converter, an inverter, a rectifier and a voltage converter such as a switched-mode converter. In addition, the use of the invention is not restricted to any system utilizing a specific basic frequency or to any specific voltage level. Moreover, the invention may be applied to two-level or three-level converters, for example.

According to an embodiment, the converter comprising the DC intermediate circuit further comprises at least one group of at least two controllable power semiconductor switches connected in series between two poles of the DC intermediate circuit. According to an embodiment, one or more groups of said at least one group of at least two controllable power semiconductor switches of the converter are controlled to conduct current between the two poles of the DC intermediate circuit in such a manner that a resulting total power dissipation in said one or more groups of said at least one group of at least two controllable power semiconductor switches of the converter causes a voltage of the DC intermediate circuit to decrease below a predetermined voltage level within a predetermined time.

Figure 1 shows a circuit diagram of a main circuit of a converter according to an exemplary embodiment. It should be noted that the figure merely illustrates components necessary for understanding the invention. The number of various components may vary from that shown in the figure. The exemplary converter is a three-phase frequency converter and is composed of a rectifier 30 and an inverter 20, between which is provided a DC intermediate circuit 10. The DC intermediate circuit 10 has a positive direct current pole UDC+ and a negative direct current pole UDC-. The voltage of the DC intermediate circuit refers to a voltage between these two poles UDC+, UDC-. The rectifier 30 and the inverter 20 could be located physically separately, and one rectifier may supply a plurality of inverters via a common DC intermediate circuit 10. Thus, the converter does not necessarily comprise the rectifier 30. An example of the rectifier 30 is a diode bridge which comprises six diodes D1, D2, D3, D4, D5, D6, and which obtains its supply from an AC source U1, V1, W1, which is for instance a 50 or 60-Hz AC network. An example of the inverter 20 is a semiconductor bridge implemented by means of six controllable semiconductor switches S1, S2, S3, S4, S5, S6. Each of the six controllable semiconductor switches S1, S2, S3, S4, S5, S6 may have an antiparallel diode connected across the switch as illustrated. More specifically, the exemplary semiconductor bridge of the inverter 20 comprises three groups of two controllable power semiconductor switches connected in series between the two poles UDC+, UDC- of the DC intermediate circuit 10, i.e. groups S1+S4, S2+S5 and S3+S6. Each group of controllable power semiconductor switches S1 to S6 connected in series between the two poles UDC+, UDC- of the DC intermediate circuit thus forms a switching branch of the inverter. The number of such switching branches of the inverter 20 and thus the number of groups of controllable power semiconductor switches connected in series between the two poles UDC+, UDC- of the DC intermediate circuit 10 may vary. The controllable semiconductor switches S1 to S6 may be transistors, such as IGBTs (Insulated-gate Bipolar Transistor) or FETs (Field-Effect Transistor), or other controllable semiconductor switches. During normal operation of the inverter 20 the controllable semiconductor switches S1 to S6 are controlled according to a modulation scheme used to supply the output U2, V2, W2 of the inverter 20 which may be a three-phase alternating current network or load. Figure 1 further shows a control arrangement 40 which can control the controllable semiconductor switches S1 to S6 and thus the operation of the inverter 20, for example. The control connections between the control arrangement 40 and the controllable semiconductor switches S1 to S6 are not shown for the sake of clarity. The control arrangement 40 can also control other operations of the converter. The control arrangement 40 may perform measurements of or receive input signals regarding various quantities in order to perform the control of the converter. Possible measuring arrangements for such quantities are not shown in the figure for the sake of clarity. Figure 1 further shows an example of the DC intermediate circuit 10 of the exemplary converter, which DC intermediate circuit 10 comprises a capacitance C, or generally an energy storage, connected between the positive direct current pole UDC+ and the negative direct current pole UDC-. Discharging the intermediate circuit 10 thus essentially means that the energy stored to the energy storage, such as the capacitance C, of the intermediate circuit 10 is discharged. The capacitance C of the intermediate circuit 10 may comprise one or more capacitors. The structure of the intermediate circuit 10 could also be different, depending on the circuit configuration used.

According to an embodiment, when the converter comprises an inverter, as in the example of Figure 1, said one or more groups of said at least one group of at least two controllable power semiconductor switches of the converter controlled to conduct current between the two poles of the DC intermediate circuit 10 in order to discharge the DC intermediate circuit comprise at least one group of at least two controllable power semiconductor switches of the inverter. In other words, in the example of Figure 1 one or more of the three groups of two controllable power semiconductor switches S1 to S6 connected in series between the two poles UDC+, UDC- of the DC intermediate circuit 10 can be used to discharge the intermediate circuit 10, more specifically, the capacitance C of the intermediate circuit 10. This may be implemented such that one or more of the groups S1+S4, S2+S5, S3+S6 of controllable power semiconductor switches of the inverter 20 is controlled to conduct current between the two poles UDC+, UDC- of the DC intermediate circuit in such a manner that the resulting total power dissipation in said one or more groups of controllable power semiconductor switches of the inverter causes a voltage of the DC intermediate circuit, i.e. in the example of Figure 1 the voltage between the two poles UDC+, UDC- of the DC intermediate circuit, to decrease below a predetermined voltage level within a predetermined time. In case there are three groups S1+S4, S2+S5, S3+S6 of controllable power semiconductor switches in the inverter, it is possible to discharge the intermediate circuit using only one or two of the groups. Preferably, however, all three groups S1+S4, S2+S5 and S3+S6 may be used in order to achieve a more even distribution of the released energy to the cooling system of the controllable power semiconductor switches S1 to S6. In each of the one or more of the groups S1+S4, S2+S5, S3+S6 of controllable power semiconductor switches of the inverter 20 that are controlled to conduct current between the two poles UDC+, UDC- of the DC intermediate circuit in order to discharge the intermediate circuit both controllable power semiconductor switches of the group may be controlled to conduct current in a linear region. In the linear region a semiconductor switch, such as a transistor, operates like an adjustable resistor and thus the magnitude of power dissipation in each of the controllable power semiconductor switches operating in the linear region can be controlled. Preferably the power dissipation in each of the controllable power semiconductor switches S1 to S6 of the inverter that are used to discharge the intermediate circuit 10 is controlled to be substantially equal and the total power dissipation of all the controllable power semiconductor switches S1 to S6 of the inverter that are used to discharge the intermediate circuit 10 is controlled to be such that the voltage of the DC intermediate circuit decreases below the predetermined voltage level within the predetermined time.

Figure 2 shows a circuit diagram of a main circuit of a converter according to another exemplary embodiment. It should be noted that the figure merely illustrates components necessary for understanding the invention. The number of various components may vary from that shown in the figure. The exemplary converter of Figure 2 corresponds to that of Figure 1 but further comprises a brake chopper 50. Brake choppers can be used in converters, such as frequency converters, for dissipating regenerated energy that cannot be fed back to the supplying network. For example, in a case where a motor (not shown) supplied by the frequency converter with the DC intermediate circuit is rotated by a load connected to the motor, the motor acts as a generator and feeds power back to the supply. When the rectifying bridge 30 of the frequency converter is not configured to feed the regenerated energy back to the supplying network, the voltage of the DC intermediate circuit starts to increase. When the voltage of the DC intermediate circuit has increased to a certain limit, e.g. higher than the nominal voltage of the intermediate circuit, the brake chopper 50 may be activated and used to convert the electrical energy into heat in a brake resistance R in order to reduce the voltage of the DC intermediate circuit. Figure 2 shows a main structure of the brake chopper 50 which comprises a group of two controllable power semiconductor switches S7, S8 connected in series between the two poles UDC+, UDC- of the DC intermediate circuit 10, i.e. group S7+S8. Each of the two controllable semiconductor switches S7, S8 may have an antiparallel diode connected across the switch as illustrated. Thus, the brake chopper 50 may be realized using a similar semiconductor module as the switching branches of the inverter 20 which module comprises two controllable semiconductor switches and two diodes. The brake resistance R connected to the brake chopper 50 may be an external component and thus not necessarily part of the converter. In normal operation of the brake chopper 50 the upper controllable semiconductor switch S7 is controlled to be non-conducting and the lower controllable semiconductor switch S8 is used to control the current flowing between the poles Udc+, Udc-and through the brake resistance R. The antiparallel diode of the upper controllable semiconductor switch S7 may be used as a flyback diode for the brake resistance R, which flyback diode may be used to eliminate a possible inductive tail current when the lower controllable semiconductor switch S8 is switched into a non-conducting state. The operation of the brake chopper 50, i.e. the two controllable semiconductor switches S7, S8 thereof, may be controlled with the control arrangement 40, for example. The control connections between the control arrangement 40 and the controllable semiconductor switches S7, S8 of the brake chopper 50 are not shown for the sake of clarity.

According to an embodiment, when the converter comprises a brake chopper, as in the example of Figure 2, said one or more groups of said at least one group of at least two controllable power semiconductor switches of the converter controlled to conduct current between the two poles of the DC intermediate circuit 10 in order to discharge the DC intermediate circuit comprise a group of two controllable power semiconductor switches of the brake chopper. In other words, in the example of Figure 2 the group S7+S8 of two controllable power semiconductor switches connected in series between the two poles UDC+, UDC- of the DC intermediate circuit 10 can be used to discharge the intermediate circuit 10. This may be implemented such that the group S7+S8 of two controllable power semiconductor switches of the brake chopper 50 is controlled to conduct current between the two poles UDC+, UDC- of the DC intermediate circuit in such a manner that the resulting total power dissipation in said group of controllable power semiconductor switches of the brake chopper causes the voltage of the DC intermediate circuit, i.e. in the example of Figure 2 the voltage between the two poles UDC+, UDC- of the DC intermediate circuit, to decrease below a predetermined voltage level within a predetermined time. When the group S7+S8 of two controllable power semiconductor switches of the brake chopper 50 is controlled to conduct current between the two poles UDC+, UDC- of the DC intermediate circuit 10 in order to discharge the DC intermediate circuit, preferably the lower controllable semiconductor switch S8 is controlled to conduct current in a saturation region, i.e. it is controlled to be fully conductive, and the upper controllable semiconductor switch S7 is controlled to conduct current in the linear region. This provides the advantage that the stress caused by the released energy from the DC intermediate circuit 10 is mainly directed on the upper controllable semiconductor switch S7, which is not used for the normal operation of the brake chopper 50. As an example, if the capacitance C of the DC intermediate circuit 10 is 6750 µF and the voltage of the DC intermediate circuit 10 is 900 V, the DC intermediate circuit 10 can be discharged in approximately 5 seconds by controlling the current to 1.2 A with the upper controllable semiconductor switch S7 operated in the linear region.

In addition to the above examples, in which the DC intermediate circuit 10 is discharged either with one or more groups S1+S4, S2+S5, S3+S6 of controllable power semiconductor switches of the inverter or with the group S7+S8 of two controllable power semiconductor switches of the brake chopper 50, it is also possible to use both one or more groups S1+S4, S2+S5, S3+S6 of controllable power semiconductor switches of the inverter and the group S7+S8 of two controllable power semiconductor switches of the brake chopper 50 for discharging the DC intermediate circuit 10.

The control of the semiconductor switches according to the various embodiments described above can be performed by or via the control arrangement 40, which can also perform e.g. the normal modulation control of the switches. It is also possible to use additional or separate logical or physical units (not shown) for performing the control functionality of the invention. The functionality of the invention could, for example, be implemented using a separate logic arrangement, which could be independent of the normal modulation control of the switches, for example. In order to control the one or more groups of at least two controllable power semiconductor switches of the converter to conduct a suitable current between the two poles of the DC intermediate circuit such that a resulting total power dissipation in said one or more groups of at least two controllable power semiconductor switches causes the voltage of the DC intermediate circuit to decrease below the predetermined voltage level within the predetermined time the control arrangement 40 may measure, or receive a measuring information of, the current flowing through said one or more groups of controllable power semiconductor switches of the converter and adjust the control signal(s), e.g. gate voltage or gate current, of the controllable power semiconductor switches such that a desired value of current is obtained in order to achieve the desired total power dissipation. The discharge of the DC intermediate circuit 10 may be performed in response to an activation of the HVIL functionality, for example. Such activation may occur when e.g. the housing of the converter is opened or a cable is detached from the converter resulting in the breaking of the high voltage interlock loop. The possible HVIL functionality may be implemented in the control arrangement 40 or in separate entity such that the control arrangement 40 merely receives a triggering signal from such a separate entity indicating that the HVIL functionality is triggered and that the discharge of the DC intermediate circuit 10 should be performed. The predetermined voltage level below which the voltage of the DC intermediate circuit 10 is to be decreased and the predetermined time within which the voltage should be decrease depend on the application in which the various embodiments are utilized. In case of the HVIL functionality, for example, the predetermined voltage level may be ≤ 60 V or ≤ 50 V and the predetermined time may be ≤ 5 s.

The control arrangement 40 and/or a separate logic arrangement controlling the controllable semiconductor switches according to any one of the embodiments, or a combination thereof, can be implemented as one unit or as two or more separate units that are configured to implement the functionality of the various embodiments. Here the term 'unit' refers generally to a physical or logical entity, such as a physical device or a part thereof or a software routine. The control arrangement 40 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use analog circuits, programmable logic devices (PLD), or discrete electric components and devices for implementing the functionality according to any one of the embodiments. For example, the control arrangement 40 according to any one of the embodiments may be implemented at least partly by means of such analog circuits or programmable logic devices.

The invention can be implemented in existing system elements or by using separate dedicated elements or devices in a centralized or distributed manner. Present converter devices, for example, can comprise programmable logic devices, or processors and memory that can be utilized in the functions according to embodiments of the invention. Thus, all modifications and configurations required for implementing an embodiment e.g. in existing converters may be performed as software routines, which may be implemented as added or updated software routines. If at least part of the functionality of the invention is implemented by software, such software can be provided as a computer program product comprising computer program code which, when run on a computer, causes the computer or a corresponding arrangement to perform the functionality according to the invention as described above. Such a computer program code may be stored or generally embodied on a computer readable medium, such as a suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that, as technology advances, the basic idea of the invention may be implemented in various ways. The invention and its embodiments are thus not restricted to the above examples but may vary within the scope of the claims.

## Claims

1. A method for discharging a DC intermediate circuit of a converter, the converter comprising the DC intermediate circuit (10) and at least one group of at least two controllable power semiconductor switches (S1, S2, S3, S4, S5, S6, S7, S8) connected in series between two poles (UDC+, UDC-) of the DC intermediate circuit, **characterised in that** the method comprises:
controlling one or more groups of said at least one group of at least two controllable power semiconductor switches (S1, S2, S3, S4, S5, S6, S7, S8) of the converter to conduct current between the two poles (UDC+, UDC-) of the DC intermediate circuit (10) in such a manner that a resulting total power dissipation in said one or more groups of said at least one group of at least two controllable power semiconductor switches of the converter causes a voltage of the DC intermediate circuit to decrease below a predetermined voltage level within a predetermined time.

2. A method according to claim 1, **characterised in that** the converter comprises an inverter (20), wherein said one or more groups of said at least one group of at least two controllable power semiconductor switches of the converter controlled to conduct comprise at least one group of at least two controllable power semiconductor switches (S1, S2, S3, S4, S5, S6) of the inverter.

3. A method according to claim 2, **characterised in that** each controllable power semiconductor switch of each one of said at least one group of at least two controllable power semiconductor switches (S1, S2, S3, S4, S5, S6) of the inverter are controlled to conduct current in a linear region.

4. A method according to claim 1, 2 or 3, **characterised in that** the converter comprises a brake chopper (50), wherein said one or more groups of said at least one group of at least two controllable power semiconductor switches of the converter controlled to conduct comprise a group of two controllable power semiconductor switches (S7, S8) of the brake chopper.

5. A method according to claim 4, **characterised in that** one controllable power semiconductor switch (S7) of said group of two controllable power semiconductor switches of the brake chopper is controlled to conduct current in a linear region and the other controllable power semiconductor switch (S8) of said group of two controllable power semiconductor switches of the brake chopper is controlled to conduct current in a saturation region.

6. A method according to any one of claims 2 to 5, **characterised in that** said controllable power semiconductor switches (S1, S2, S3, S4, S5, S6) of the inverter and/or said controllable power semiconductor switches of the brake chopper are transistors.

7. A method according to any one of claims 1 to 6, **characterised in that** the predetermined voltage level is ≤ 60 V and the predetermined time is ≤ 5 s.

8. A computer program product comprising computer program code, wherein execution of the program code on a computer causes the computer to carry out the steps of the method according to any one of claims 1 to 7.

9. A converter comprising:
a DC intermediate circuit (10); and
at least one group of at least two controllable power semiconductor switches (S1, S2, S3, S4, S5, S6, S7, S8) connected in series between two poles (UDC+, UDC-) of the DC intermediate circuit, **characterised in that** the converter comprises:
means (40) for controlling one or more groups of said at least one group of at least two controllable power semiconductor switches (S1, S2, S3, S4, S5, S6, S7, S8) of the converter to conduct current between the two poles (UDC+, UDC-) of the DC intermediate circuit (10) in such a manner that a resulting total power dissipation in said one or more groups of said at least one group of at least two controllable power semiconductor switches of the converter causes a voltage of the DC intermediate circuit to decrease below a predetermined voltage level within a predetermined time.

10. A converter according to claim 9, **characterised in that** the converter comprises an inverter (20), wherein said one or more groups of said at least one group of at least two controllable power semiconductor switches of the converter controlled to conduct comprise at least one group of at least two controllable power semiconductor switches (S1, S2, S3, S4, S5, S6) of the inverter.

11. A converter according to claim 10, **characterised in that** the means (40) for controlling are configured to control each controllable power semiconductor switch of each one of said at least one group of at least two controllable power semiconductor switches (S1, S2, S3, S4, S5, S6) of the inverter to conduct current in a linear region.

12. A converter according to claim 9, 10 or 11, **characterised in that** the converter comprises a brake chopper (50), wherein said one or more groups of said at least one group of at least two controllable power semiconductor switches of the converter controlled to conduct comprise a group of two controllable power semiconductor switches (S7, S8) of the brake chopper.

13. A converter according to claim 12, **characterised in that** the means (40) for controlling are configured to control one controllable power semiconductor switch (S7) of said group of two controllable power semiconductor switches of the brake chopper to conduct current in a linear region and the other controllable power semiconductor switch (S8) of said group of two controllable power semiconductor switches of the brake chopper to conduct current in a saturation region.

14. A converter according to any one of claims 10 to 13, **characterised in that** said controllable power semiconductor switches (S1, S2, S3, S4, S5, S6) of the inverter and/or said controllable power semiconductor switches (S7, S8) of the brake chopper are transistors.

15. A converter according to any one of claims 9 to 14 **characterised in that** the predetermined voltage level is ≤ 60 V and the predetermined time is ≤ 5 s.
